# EUROPEAN PATENT APPLICATION

(11) **EP 4 817 980 A1**
(43) Date of publication of application: **07.10.2026**
(21) Application number: 25201517.7
(22) Date of filing: 11.09.2025
(51) Int. Cl.: B60W 30/16, B60W 30/18

(54) **SMART REGENERATIVE BRAKING METHOD AND APPARATUS**

(30) Priority: 02.04.2025 KR 20250043093
(71) Applicant: Hyundai Motor Company, Seoul 06797 (KR); Kia Corporation, Seoul 06797 (KR)
(72) Inventor: SIM, Gyu Bin, 18280 Hwaseong-si, Gyeonggi-do (KR); PARK, Ji Won, 18280 Hwaseong-si, Gyeonggi-do (KR); JI, Yong Hyeok, 18280 Hwaseong-si, Gyeonggi-do (KR); LEE, Jeong Ah, 18280 Hwaseong-si, Gyeonggi-do (KR); PARK, Ji Ho, 18280 Hwaseong-si, Gyeonggi-do (KR)
(74) Representative: Isarpatent

(57) **Abstract**

A regenerative braking method includes determining a maximum required distance from a preceding vehicle based on a speed of a subject vehicle and a distance control parameter based on satisfying a distance control parameter update condition during inter-vehicle distance control driving. The regenerative braking method further includes updating the distance control parameter based on the maximum required distance and a relative distance with respect to the preceding vehicle. The regenerative braking method further includes determining a target distance from the preceding vehicle based on the distance control parameter. The regenerative braking method further includes controlling a powertrain including a drive motor based on the target distance.

## Description

### TECHNICAL FIELD

The present disclosure relates to an eco-friendly vehicle, and more specifically, the present disclosure relates to a method and an apparatus for controlling the distance from a preceding vehicle in smart regenerative braking.

### BACKGROUND

In general, a hybrid electric vehicle (HEV) refers to a vehicle that travels using driving power provided by an engine and a motor, and an electric vehicle (EV) refers to a vehicle that travels using driving power provided by a motor.

In such an HEV or EV, driving power is provided by a motor at the start or below a certain speed, and when the driver does not press the accelerator or brake while the vehicle is traveling, coasting in which the vehicle travels by inertia is performed. During such coasting, a regenerative braking function is executed to simulate the behavior of an internal combustion engine vehicle.

Recently, a smart regenerative system (SRS) has been developed that automatically adjusts the speed and braking of a vehicle depending on road conditions during coasting.

However, conventional SRSs do not take into account a situation in which the driver takes his/her foot off the accelerator pedal, and thus there is a possibility that the vehicle will decelerate rapidly when the driver takes his/her foot off the accelerator pedal while the vehicle is approaching a preceding vehicle.

Therefore, in this technical field, a technology for allowing a vehicle to smoothly decelerate when the driver takes his/her foot off the accelerator pedal in an SRS is required. The subject matter described in this background section is intended to promote an understanding of the background of the disclosure and thus may include subject matter that is not already known to those of ordinary skill in the art. The statements in this section merely provide background information related to the present disclosure and may not constitute prior art.

### SUMMARY

An aspect of the present disclosure aims to provide a technology for allowing a vehicle to decelerate smoothly when the driver takes his/her foot off the accelerator pedal in a smart regenerative system.

Another aspect of the present disclosure aims to minimize driver's intervention in acceleration and deceleration during a regenerative braking operation by matching a target inter-vehicle distance and a relative distance with respect to a preceding vehicle during a smart regenerative braking operation.

The aspects of the present disclosure are not limited to the aspects mentioned above, and other aspects not mentioned should be clearly understood by those having ordinary skill in the art from the present disclosure.

In accordance with an aspect of the present disclosure, a regenerative braking method includes determining a maximum required distance from a preceding vehicle based on a speed of a subject vehicle and a distance control parameter and based on satisfying a distance control parameter update condition during inter-vehicle distance control driving. The method further includes updating the distance control parameter based on the maximum required distance and a relative distance with respect to the preceding vehicle. The method further includes determining a target distance from the preceding vehicle based on the distance control parameter. The method further includes controlling a powertrain including a drive motor based on the target distance.

Updating the distance control parameter may include determining a correction coefficient for updating the distance control parameter based on the maximum required distance and the relative distance with respect to the preceding vehicle; and updating the distance control parameter based on the correction coefficient.

The distance control parameter update condition may be satisfied based on occurrence of at least one of release of an accelerator pedal by a driver, detection of a new preceding vehicle in front of the subject vehicle, cutting of a preceding vehicle in front of the subject vehicle, increase in a distance between the subject vehicle and the preceding vehicle, or a combination thereof.

The method further may further include determining the maximum required distance based on a minimum maintenance distance from the preceding vehicle.

The method further may further include determining the target distance based on a minimum maintenance distance from the preceding vehicle.

Controlling the powertrain may include determining a target acceleration based on the target distance; determining a torque for following the target acceleration; and controlling the powertrain based on the torque.

The distance control parameter may include a speed-linked distance for increasing the maximum required distance in proportion to the speed of the subject vehicle.

The distance control parameter may further include a speed square-linked distance for increasing the maximum required distance in proportion to a square of the speed of the subject vehicle to the preceding vehicle.

In accordance with another aspect of the present disclosure, a regenerative braking apparatus includes a powertrain including a drive motor and includes a controller. The controller is configured to determine a maximum required distance from a preceding vehicle based on a speed of a subject vehicle and a distance control parameter and based on satisfying a distance control parameter update condition during inter-vehicle distance control driving. The controller is further configured to update the distance control parameter based on the maximum required distance and a relative distance with respect to the preceding vehicle. The controller is further configured to determine a target distance from the preceding vehicle based on the distance control parameter. The controller is further configured to control the powertrain based on the target distance.

The controller may be configured to determine a correction coefficient for updating the distance control parameter based on the maximum required distance and the relative distance with respect to the preceding vehicle. The controller may be further configured to update the distance control parameter based on the correction coefficient.

The distance control parameter update condition may be satisfied based on occurrence of at least one of release of an accelerator pedal by a driver, detection of a new preceding vehicle in front of the subject vehicle, cutting of a preceding vehicle in in front of the subject vehicle, increase in a distance between the subject vehicle and the preceding vehicle, or a combination thereof.

The maximum required distance may be determined based on a minimum maintenance distance from the preceding vehicle.

The controller may be further configured to determine the target distance based on a minimum maintenance distance from the preceding vehicle.

The controller may be configured to determine a target acceleration based on the target distance; determine a torque for following the target acceleration; and control the powertrain based on the torque.

The distance control parameter may include a speed-linked distance for increasing the maximum required distance in proportion to the speed of the subject vehicle.

The distance control parameter may further include a speed square-linked distance for increasing the maximum required distance in proportion to a square of the speed of the subject vehicle to the preceding vehicle.

### BRIEF DESCRIPTION OF THE DRAWINGS

The above and other objects, features, and other advantages of the present disclosure should be more clearly understood from the following detailed description taken in conjunction with the accompanying drawings, in which:
FIG. 1 schematically illustrates a configuration of a smart regenerative braking apparatus according to an embodiment of the present disclosure;
FIG. 2 is a flowchart illustrating a smart regenerative braking method according to an embodiment of the present disclosure;
FIG. 3 illustrates pressure changes in an accelerator pedal sensor (APS) and a brake pedal sensor (BPS) detected in a vehicle as a driver releases an accelerator pedal;
FIG. 4 illustrates an example in which a speed-linked distance is corrected as a driver releases an accelerator pedal;
FIG. 5 illustrates an example in which a speed square-linked distance is corrected as the driver releases the accelerator pedal;
FIG. 6 illustrates an example in which a target distance to a preceding vehicle is corrected as a driver releases the accelerator pedal, and a vehicle follows the target distance and thus a measured distance to the preceding vehicle changes;
FIG. 7 illustrates an example in which a target acceleration for following the corrected target distance changes as the driver releases the accelerator pedal; and
FIG. 8 illustrates an example in which a vehicle speed changes according to a target acceleration that changes as the driver releases the accelerator pedal.

### DETAILED DESCRIPTION

Specific structural and functional descriptions of the embodiments of the present disclosure are merely illustrative for the purpose of explaining the embodiments according to the present disclosure. The embodiments according to the present disclosure may be implemented in various forms and should not be construed as being limited to the embodiments described in the present disclosure.

Because the embodiments according to the present disclosure can be modified in various manners and have various forms, specific embodiments are illustrated in the drawings and described in detail in the present disclosure. However, this is not intended to limit the embodiments according to the concept of the present disclosure to a specific disclosed form and should be understood to include all changes, equivalents, and substitutes included in the spirit and technical scope of the present disclosure.

All terms including technical or scientific terms have the same meanings as generally understood by a person having ordinary skill in the art to which the present disclosure pertains unless mentioned otherwise. Generally used terms, such as terms defined in a dictionary, should be interpreted to coincide with meanings of the related art from the context. Unless differently defined in the present disclosure, such terms should not be interpreted in an ideal or excessively formal manner.

Hereinafter, embodiments disclosed in the present disclosure are described in detail with reference to the attached drawings. However, identical or similar components are assigned the same reference numeral, and redundant descriptions thereof have been omitted.

In the description of the following embodiments, the term "preset" means that the value of a parameter is predetermined when the parameter is used in a process or an algorithm. Depending on embodiments, the value of a parameter may be set when a process or an algorithm starts or may be set during a period in which the process or the algorithm is performed.

The terms "module" and "unit" or "part" used to signify components are used herein to aid in understanding of the components and thus they should not be considered as having specific meanings or roles. When a controller, module, unit, part, component, device, element, or the like of the present disclosure is described as having a purpose or performing an operation, function, or the like, the controller, module, unit, part, component, device, element, or the like should be considered herein as being "configured to" meet that purpose or to perform that operation or function. Each controller, module, unit, part, component, device, element, and the like may separately embody or be included with a processor and a memory, such as a non-transitory computer readable media, as part of the apparatus.

In the following description of the embodiments disclosed in the present disclosure, a detailed description of known functions and configurations incorporated herein has been omitted when it may obscure the subject matter of the present disclosure. In addition, the accompanying drawings are provided only for ease of understanding of the embodiments disclosed in the present disclosure, do not limit the technical spirit disclosed herein, and include all changes, equivalents and substitutes included in the spirit and scope of the present disclosure.

The terms "first" and/or "second" are used to describe various components, but such components are not limited by these terms. The terms are used to discriminate one component from another component.

When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

An element described in the singular form is intended to include a plurality of elements unless the context clearly indicates otherwise.

In the present disclosure, it should be further understood that the terms, such as "comprise" or "include", specify the presence of a stated feature, figure, step, operation, component, part or combination thereof but do not preclude the presence or addition of one or more other features, figures, steps, operations, components, or combinations thereof.

In addition, "unit" or "control unit" included in a motor control unit (MCU), a hybrid control unit (HCU), etc. is merely a term widely used to name a controller that controls a vehicle-specific function and does not mean a generic functional unit.

A controller may include a communication device that communicates with other controllers or sensors to control the functions thereof, a memory that stores an operating system, logic instructions, and input/output information, and one or more processors that perform determination, calculation, decisions, etc. necessary to controlling the functions thereof.

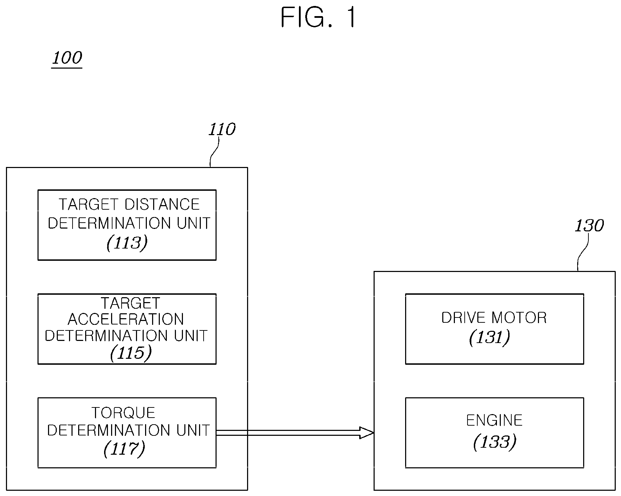

FIG. 1 schematically illustrates a configuration of a smart regenerative braking apparatus according to an embodiment of the present disclosure.

Referring to FIG. 1, the smart regenerative braking device 100 according to the present embodiment includes a controller 110 and a powertrain 130.

The controller 110 includes a target distance determination unit 113, a target acceleration determination unit 115, and a torque determination unit 117.

The target distance determination unit 113 determines a target distance from a preceding vehicle in front of the vehicle in consideration of the speed of the vehicle equipped with the smart regenerative braking apparatus, a relative speed of the vehicle to the preceding vehicle, and the like.

The target distance determination unit 113 determines a maximum required distance from the preceding vehicle if a distance control parameter update condition is satisfied during inter-vehicle distance control driving when the vehicle is in a smart regenerative braking mode. The target distance determination unit 113 determines a correction coefficient for distance control parameter update based on the maximum required distance and the relative distance. The target distance determination unit 113 updates a distance control parameter based on the correction coefficient to determine the target distance from the preceding vehicle.

The inter-vehicle distance control driving may be performed, for example, when there is a preceding vehicle ahead in a situation in which the driver takes his/her foot off the accelerator pedal while the driver is driving the vehicle.

The distance control parameter update condition may be determined to be satisfied when at least one of a case where the accelerator pedal is released by the driver, a case where a preceding vehicle is newly detected in front of the subject vehicle, a case where a preceding vehicle cuts in in front of the subject vehicle, a case where the distance between and a preceding vehicle and the subject vehicle increases, or a combination thereof occurs.

A newly detected preceding vehicle under the distance control parameter update condition may be a different vehicle from a preceding vehicle detected in the above-described inter-vehicle distance control driving.

A preceding vehicle, which is described below, may indicate a newly detected preceding vehicle under the distance control parameter update condition.

In an embodiment, the maximum required distance from the preceding vehicle, the correction coefficient, the distance control parameter, and the target distance from the preceding vehicle may be determined based on the following mathematical expressions 1-5.

The maximum required distance from the preceding vehicle may be calculated by the following mathematical expression 1. [Mathematical expression 1] ${d}_{des , max} = {τ}_{max} {v}_{ego} + {b}_{max} {v}_{rel}^{2} + {d}_{min} \left({v}_{rel}<0\right)$

In the above mathematical expression 1, d_{des,max} represents the maximum required distance from the preceding vehicle, τₘₐₓ is a speed-linked distance for increasing the maximum required distance in proportion to the speed of the subject vehicle, v_{ego} is the speed of the subject vehicle, bₘₐₓ is a speed square-linked distance for increasing the maximum required distance in proportion to the square of the relative speed of the subject vehicle to the preceding vehicle, vᵣₑₗ is the relative speed of the subject vehicle to the preceding vehicle, and dₘᵢₙ represents a minimum maintenance distance from the preceding vehicle.

The minimum maintenance distance from the preceding vehicle may be a minimum maintenance distance that needs to be maintained between the preceding vehicle and the subject vehicle when the preceding vehicle stops.

The correction coefficient for distance control parameter update may be calculated by the following mathematical expression 2. [Mathematical expression 2] ${r}_{corr} = max \left(1, \frac{{d}_{rel , start} - {d}_{min}}{{d}_{des , max} - {d}_{min}}\right)$

In the above mathematical expression 2, r_{corr} represents the correction coefficient for distance control parameter update, d_{des,max} represents the maximum required distance from the preceding vehicle, and d_{rel,start} represents the relative distance to the preceding vehicle. In addition, dₘᵢₙ represents the minimum maintenance distance from the preceding vehicle.

Because there is no need to perform deceleration when the relative distance to the preceding vehicle is greater than the maximum required distance, the correction coefficient r_{corr} always has a value equal to or less than 1.

The distance control parameter may be calculated by the following mathematical expressions 3 and 4. [Mathematical expression 3] $τ = {τ}_{max} {r}_{corr}$ [Mathematical expression 4] $b = {b}_{max} {r}_{corr}$

In the above mathematical expressions 3 and 4, τ represents a speed-linked distance corrected by applying the correction coefficient r_{corr} to the speed-linked distance of mathematical expression 1, and b represents a speed square-linked distance corrected by applying the correction coefficient r_{corr} to the speed square-linked distance of mathematical expression 1.

The target distance from the preceding vehicle may be determined by the following mathematical expression 5. [Mathematical expression 5] ${d}_{des} = {τv}_{ego} + {bv}_{rel}^{2} + {d}_{min} \left({v}_{rel}<0\right)$

In the above mathematical expression 5, d_{des} represents the target distance from the preceding vehicle, τ represents a speed-linked distance corrected by mathematical expression 4, v_{ego} represents the speed of the subject vehicle, b represents a speed square-linked distance corrected by mathematical expression 4, vᵣₑₗ represents the relative speed of the subject vehicle to the preceding vehicle, and dₘᵢₙ represents a minimum maintenance distance from the preceding vehicle.

In another embodiment, the maximum required distance from the preceding vehicle, the correction coefficient, the distance control parameter, and the target distance from the preceding vehicle may be determined based on the following mathematical expressions 6-9.

The maximum required distance from the preceding vehicle may be calculated by the following mathematical expression 6. [Mathematical expression 6] ${d}_{des , max} = {τ}_{max} {v}_{ego} + {d}_{min}$

In the above mathematical expression 6, d_{des,max} represents the maximum required distance from the preceding vehicle, τₘₐₓ is a speed-linked distance for increasing the maximum required distance in proportion to the speed of the subject vehicle, v_{ego} is the speed of the subject vehicle, and dₘᵢₙ represents the minimum maintenance distance from the preceding vehicle.

The correction coefficient for distance control parameter update may be calculated by the following mathematical expression 7. [Mathematical expression 7] ${r}_{corr} = max \left(1, \frac{{d}_{rel , start} - {d}_{min}}{{d}_{des , max} - {d}_{min}}\right)$

In the above mathematical expression 7, r_{corr} represents the correction coefficient for distance control parameter update, d_{des,max} represents the maximum required distance from the preceding vehicle, and d_{rel,start} represents the relative distance to the preceding vehicle. In addition, dₘᵢₙ represents the minimum maintenance distance from the preceding vehicle.

The distance control parameter may be calculated by the following mathematical expression 8. [Mathematical expression 8] $τ = {τ}_{max} {r}_{corr}$

In the above mathematical expression 8, τ represents a speed-linked distance corrected by applying the correction coefficient to the speed-linked distance of mathematical expression 6.

The target distance from the preceding vehicle may be determined by the following mathematical expression 9. [Mathematical expression 9] ${d}_{des} = {τv}_{ego} + {d}_{min}$

In the above mathematical expression 9, d_{des} represents the target distance from the preceding vehicle, τ represents a speed-linked distance corrected through mathematical expression 8, v_{ego} is the speed of the subject vehicle, and dₘᵢₙ represents the minimum maintenance distance from the preceding vehicle.

The target acceleration determination unit 115 determines a target acceleration of the vehicle to reach the target distance from the preceding vehicle determined by the target distance determination unit 113.

The torque determination unit 117 determines a torque for following the target acceleration determined by the target acceleration determination unit 115 and controls the powertrain 130 based on the determined torque.

The powertrain 130 performs an operation of maintaining the target distance from the preceding vehicle under the control of the controller 110.

The powertrain 130 may include a drive motor 131 and may further include an engine 133 in the case of a hybrid vehicle.

The smart regenerative braking mode according to the embodiment may be performed through regenerative braking torque control of the drive motor 131.

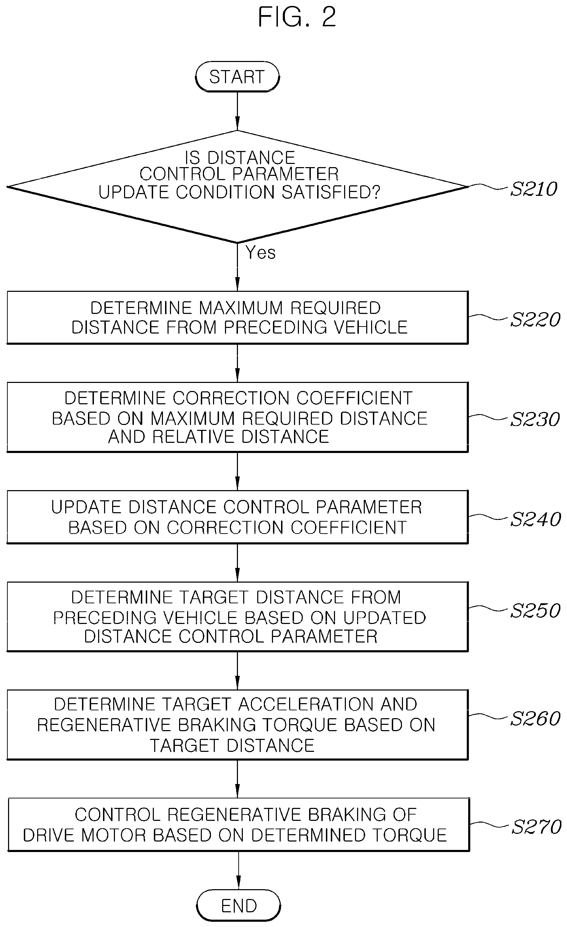

FIG. 2 is a flowchart illustrating a smart regenerative braking method according to an embodiment of the present disclosure.

The smart regenerative braking method according to the present embodiment may be performed by the controller 110 of FIG. 1.

Referring to FIG. 2, the controller 110 determines whether the distance control parameter update condition is satisfied during inter-vehicle distance control driving when the vehicle is in the smart regenerative braking mode (S210).

Inter-vehicle distance control driving may be performed, for example, when there is a preceding vehicle in a situation where the driver releases the accelerator pedal while the driver is driving the vehicle.

The distance control parameter update condition may be determined to be satisfied when at least one of a case where the accelerator pedal is released by the driver, a case where a preceding vehicle is newly detected ahead of the subject vehicle, a case where a preceding vehicle cuts in ahead of the subject vehicle, a case where the distance between the subject vehicle and the preceding vehicle increases, or a combination thereof occurs.

A newly detected preceding vehicle under the distance control parameter update condition may be a different vehicle from the preceding vehicle detected in the above-described inter-vehicle distance control driving.

The preceding vehicle described below may indicate a newly detected preceding vehicle under the control distance parameter update condition.

As a result of the determination in step S210, if the distance control parameter update condition is satisfied (Yes in S210), the controller 110 determines a maximum required distance from the preceding vehicle (S220).

In an embodiment, the maximum required distance may be determined based on a speed-linked distance for increasing the maximum required distance in proportion to the speed of the subject vehicle, the speed of the subject vehicle, a speed square-linked distance for increasing the maximum required distance in proportion to the square of the relative speed of the subject vehicle to the preceding vehicle, the relative speed of the subject vehicle to the preceding vehicle, and the minimum maintenance distance from the preceding vehicle. For example, the maximum required distance from the preceding vehicle may be determined by mathematical expression 1.

In another embodiment, the maximum required distance may be determined based on the speed-linked distance for increasing the maximum required distance in proportion to the speed of the subject vehicle, the speed of the subject vehicle, and the minimum maintenance distance from the preceding vehicle. For example, the maximum required distance from the preceding vehicle may be determined by mathematical expression 6.

In addition, the controller 110 determines a correction coefficient for distance control parameter update based on the maximum required distance and the relative distance (S230).

The correction coefficient may be determined based on the target distance from the preceding vehicle, the relative distance to the preceding vehicle, and the minimum maintenance distance from the preceding vehicle.

In addition, the controller 110 updates the distance control parameter based on the correction coefficient (S240).

The updated distance control parameter may include the speed-linked distance and the speed square-linked distance or may include only the speed-link distance.

For example, if the maximum required distance is determined by mathematical expression 1, the updated distance control parameter may include the speed-linked distance and the speed square-linked distance.

As another example, if the maximum required distance is determined by mathematical expression 6, the updated distance control parameter may include only the speed-linked distance.

In addition, the controller 110 determines a target distance from the preceding vehicle based on the updated distance control parameter (S250).

In an embodiment, the target distance from the preceding vehicle may be determined by mathematical expression 5.

In another embodiment, the target distance from the preceding vehicle may be determined by mathematical expression 9.

Further, the controller unit 110 determines a target acceleration and a torque for following the target acceleration, i.e., a regenerative braking torque, based on the target distance (S260) and controls regenerative braking of the drive motor based on the determined torque (S270).

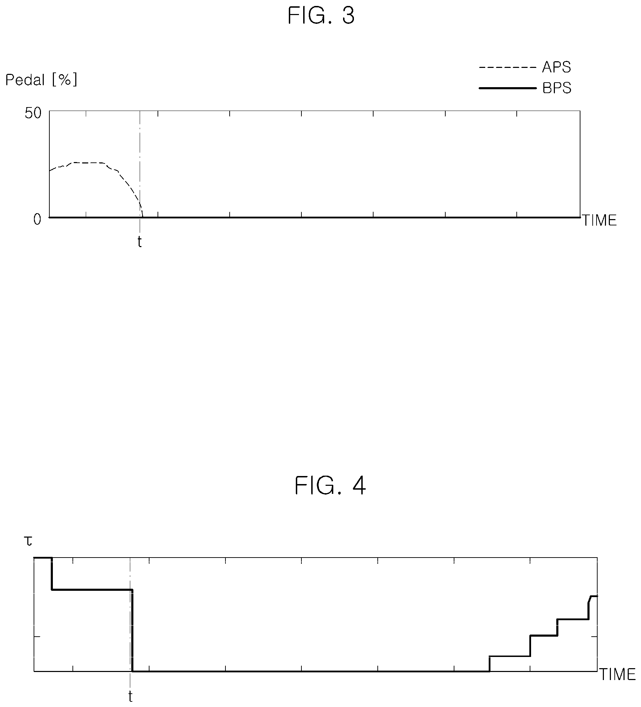

FIG. 3-FIG. 8 illustrate an example in which a target distance and a target acceleration are determined and deceleration is performed as a speed-linked distance value and a speed square-linked distance value are updated after the driver of a vehicle using the smart regenerative braking apparatus according to an embodiment of the present disclosure releases the accelerator pedal during driving.

FIG. 3 shows pressure changes in an accelerator pedal sensor (APS) and a brake pedal sensor (BPS) detected in the vehicle as the driver releases the accelerator pedal. Referring to FIG. 3, because the driver does not depress the brake pedal, BPS = 0 is maintained, and it can be ascertained that APS = 0 at a time t when the accelerator pedal is completely released.

FIG. 4 shows an example in which the speed-linked distance is corrected as the driver releases the accelerator pedal. Referring to FIG. 4, it can be ascertained that the speed-linked distance has been reduced by applying the correction coefficient to the speed-linked distance according to the above mathematical equations 1-3 at the time t when the driver completely releases the accelerator pedal. For example, τ can be corrected from 1.5 to 0.8.

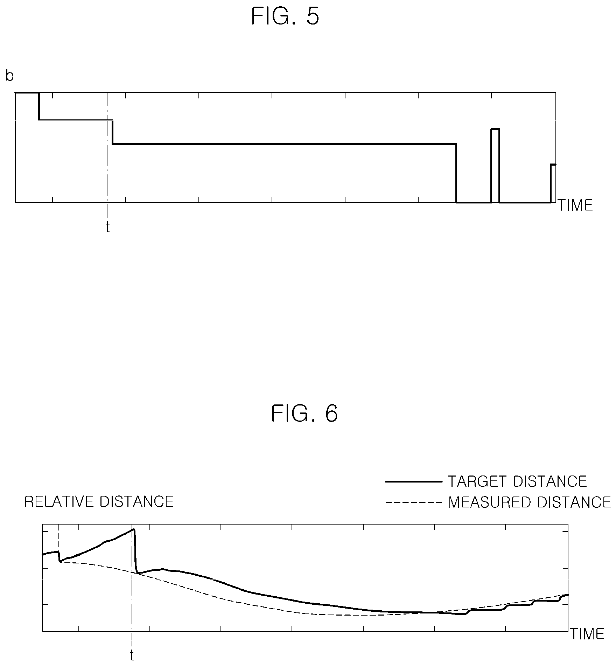

FIG. 5 shows an example in which the speed square-linked distance is corrected as the driver releases the accelerator pedal. Referring to FIG. 5, it can be ascertained that the speed square-linked distance has been reduced by applying the correction coefficient to the speed square-linked distance according to the above mathematical equations 1, 2, and 4 at the time t when the driver completely releases the accelerator pedal. For example, b can be corrected from 0.5 to 0.266.

FIG. 6 shows an example in which the target distance from the preceding vehicle is corrected as the driver releases the accelerator pedal, and the vehicle follows the target distance and thus the distance from the preceding vehicle changes. Referring to FIG. 6, it can be ascertained that the target distance between the vehicle and the preceding vehicle increases and then decreases after being corrected at the time t when the driver completely releases the accelerator pedal, and the actual distance from the preceding vehicle naturally decreases. If the target distance does not decrease at the time t but gradually increases, the vehicle performs sudden deceleration, which may cause a poor driving experience.

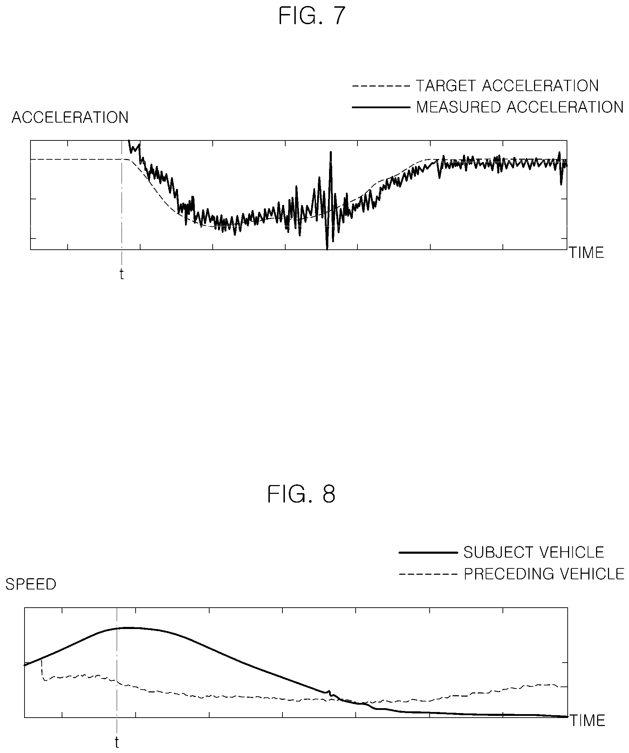

FIG. 7 shows an example in which the target acceleration for following the corrected target distance changes as the driver releases the accelerator pedal. Referring to FIG. 7, it can be ascertained that the vehicle travels at a constant acceleration, and then at the time t when the driver completely releases the accelerator pedal, the target acceleration gradually decreases in order to follow the decreased target distance from the preceding vehicle, and then gradually increases after reaching a constant acceleration.

FIG. 8 shows an example in which the vehicle speed changes according to a target acceleration that changes as the driver releases the accelerator pedal. Referring to FIG. 8, it can be ascertained that the vehicle speed increases at a constant speed and then gradually decreases from the time t when the driver completely releases the accelerator pedal.

According to the embodiments of the present disclosure described above, a technology for allowing a vehicle to decelerate smoothly and travel when the driver takes his/her foot off the accelerator pedal in a smart regenerative system is provided.

In addition, it is possible to minimize driver's intervention in acceleration and deceleration during a regenerative braking operation by matching a target inter-vehicle distance and a relative distance with respect to a preceding vehicle during a smart regenerative braking operation.

In addition, conventionally, the target distance parameter is fixed, and thus when the accelerator is released in a situation where a preceding vehicle is close, rapid deceleration occurs, resulting in driver's frequent intervention in acceleration. However, according to the embodiments of the present disclosure, when the accelerator is released at a distance far from a preceding vehicle, a long distance can be maintained, and when the accelerator is released at a close distance from the preceding vehicle, the target distance parameter value can be reduced to maintain a close distance.

Accordingly, it is possible to minimize driver's intervention in acceleration/deceleration during the regenerative braking operation.

The above-described present disclosure may be implemented as computer-readable code on a medium in which a program is recorded. A computer-readable medium includes all kinds of recording devices in which data that can be read by a computer system is stored. Examples of the computer-readable medium include a hard disk drive (HDD), a solid state drive (SSD), a silicon disk drive (SDD), a ROM, a RAM, a CD-ROM, a magnetic tape, a floppy disk, an optical data storage device, etc.

According to various embodiments of the present disclosure as described above, it is possible to provide a technology for allowing a vehicle to decelerate smoothly when the driver takes his/her foot off the accelerator pedal in a smart regenerative system.

In addition, it is possible to minimize driver's intervention in acceleration and deceleration during a regenerative braking operation by matching a target inter-vehicle distance and a relative distance with respect to a preceding vehicle during a smart regenerative braking operation.

The effects that can be obtained from the present disclosure are not limited to the effects mentioned above, and other effects that are not mentioned can be clearly understood by those having ordinary skill in the art from the description below.

Therefore, the above detailed description should not be construed as limiting in all aspects and should be considered as illustrative. The scope of the present disclosure should be determined by a reasonable interpretation of the appended claims, and all changes within the equivalent scope of the present disclosure are included in the scope of the present disclosure.

## Claims

1. A regenerative braking method comprising:
determining a maximum required distance from a preceding vehicle based on a speed of a subject vehicle and a distance control parameter and based on satisfying a distance control parameter update condition during inter-vehicle distance control driving;
updating the distance control parameter based on the maximum required distance and a relative distance with respect to the preceding vehicle;
determining a target distance from the preceding vehicle based on the distance control parameter; and
controlling a powertrain including a drive motor based on the target distance.

2. The method of claim 1, wherein updating the distance control parameter comprises:
determining a correction coefficient for updating the distance control parameter based on the maximum required distance and the relative distance with respect to the preceding vehicle; and
updating the distance control parameter based on the correction coefficient.

3. The method of claim 1, wherein the distance control parameter update condition is satisfied based on occurrence of at least one of release of an accelerator pedal by a driver, detection of a new preceding vehicle in front of the subject vehicle, cutting of a preceding vehicle in front of the subject vehicle, increase in a distance between the subject vehicle and the preceding vehicle, or a combination thereof.

4. The method of claim 1, further comprising:
determining the maximum required distance based on a minimum maintenance distance from the preceding vehicle.

5. The method of claim 1, further comprising:
determining the target distance based on a minimum maintenance distance from the preceding vehicle.

6. The method of claim 1, wherein controlling the powertrain comprises:
determining a target acceleration based on the target distance;
determining a torque for following the target acceleration; and
controlling the powertrain based on the torque.

7. The method of claim 1, wherein the distance control parameter includes a speed-linked distance for increasing the maximum required distance in proportion to the speed of the subject vehicle.

8. The method of claim 7, wherein the distance control parameter further includes a speed square-linked distance for increasing the maximum required distance in proportion to a square of the speed of the subject vehicle to the preceding vehicle.

9. A regenerative braking apparatus comprising:
a powertrain including a drive motor; and
a controller configured to:
determine a maximum required distance from a preceding vehicle based on a speed of a subject vehicle and a distance control parameter and based on satisfying a distance control parameter update condition during inter-vehicle distance control driving;
update the distance control parameter based on the maximum required distance and a relative distance with respect to the preceding vehicle;
determine a target distance from the preceding vehicle based on the distance control parameter; and
control the powertrain based on the target distance.

10. The apparatus of claim 9, wherein the controller is further configured to:
determine a correction coefficient for updating the distance control parameter based on the maximum required distance and the relative distance with respect to the preceding vehicle; and
update the distance control parameter based on the correction coefficient.

11. The apparatus of claim 9, wherein the distance control parameter update condition is satisfied based on occurrence of at least one of release of an accelerator pedal by a driver, detection of a new preceding vehicle in front of the subject vehicle, cutting of a preceding vehicle in in front of the subject vehicle, increase in a distance between the subject vehicle and the preceding vehicle, or a combination thereof.

12. The apparatus of claim 9, wherein the controller is further configured to:
determine the maximum required distance based on a minimum maintenance distance from the preceding vehicle.

13. The apparatus of claim 9, wherein the controller is further configured to:
determine the target distance based on a minimum maintenance distance from the preceding vehicle.

14. The apparatus of claim 9, wherein the controller is further configured to:
determine a target acceleration based on the target distance;
determine a torque for following the target acceleration; and
control the powertrain based on the torque.

15. The apparatus of claim 9, where the distance control parameter includes a speed-linked distance for increasing the maximum required distance in proportion to the speed of the subject vehicle.
